Europäisches Patentamt

European Patent Office

Office européen des brevets

(11) Veröffentlichungsnummer: **0 164 514**
**B1**

# EUROPÄISCHE PATENTSCHRIFT

(45) Veröffentlichungstag der Patentschrift:
14.06.89

(51) Int. Cl.⁴: **C 02 F 5/08**, B 01 J 39/14,
C 11 D 3/08

(21) Anmeldenummer: 85104029.5

(22) Anmeldetag: 03.04.85

(54) Verwendung von kristallinen schichtförmigen Natriumsilikaten zur Wasserenthärtung und Verfahren zur Wasserenthärtung.

(30) Priorität: 11.04.84 DE 3413571

(43) Veröffentlichungstag der Anmeldung:
18.12.85 Patentblatt 85/51

(45) Bekanntmachung des Hinweises auf die Patenterteilung:
14.06.89 Patentblatt 89/24

(84) Benannte Vertragsstaaten:
BE CH DE FR GB IT LI NL SE

(56) Entgegenhaltungen:
DE-A- 2 549 167
GB-A- 1 141 032
US-A- 3 912 649
US-A- 4 019 998

(73) Patentinhaber: HOECHST AKTIENGESELLSCHAFT,
Postfach 80 03 20, D-6230 Frankfurt am Main 80 (DE)

(72) Erfinder: Rieck, Hans-Peter, Dr., Staufenstrasse 13a.
D-6238 Hofheim am Taunus (DE)

## Beschreibung

Die vorliegende Erfindung betrifft die Verwendung von kristallinen schichtförmigen Natriumsilikaten zur Wasserenthärtung, ein Verfahren zur Enthärtung von Wasser, das Ca- und/oder Mg-Ionen enthält, sowie Wasch- und Reinigungsmittel, die die genannten Natriumsilikate enthalten.

Das in der Natur vorkommende Wasser, sei es Oberflächenwasser oder Grundwasser sowie das gewöhnliche Leitungswasser, enthält neben gelösten Gasen eine Reihe von Salzen, die aus den Böden und Gesteinen herausgelöst werden oder teilweise auch aus Abwasserzuläufen stammen. Die wichtigsten Bestandteile sind die Salze des Natriums, Kalziums und des Magnesiums. Für die Härte des Wassers sind von diesen nur die Erdalkalien Kalzium und Magnesium verantwortlich. Üblich ist die Angabe von mg Erdalkalioxid pro Liter Wasser. Dabei entsprechen 10,00 mg CaO bzw. 7,19 mg MgO/l der Masseinheit von einem Deutschen Grad (°d). Im allgemeinen besteht die Gesamthärte des Wassers (in der Bundesrepublik Deutschland) zu 70–85% aus Ca- und zu 30–15% aus Mg-Härte.

In Wasch- und Reinigungsprozessen stört diese Härte, da die Erdalkaliionen die Waschwirksamkeit der Tenside beeinträchtigen. Aus diesem Grunde werden den Wasch- und Reinigungsmitteln sogenannte Builder zugegeben, die die Härte der Waschlösung ganz oder teilweise beseitigen, so eine Wechselwirkung der Erdalkaliionen mit den Tensiden verhindern und die Waschwirksamkeit der Tenside erhöhen. Diese Enthärtung kann erreicht werden durch Überführung der Erdalkaliionen in lösliche Komplexsalze. Weniger erwünscht ist eine Ausfällung, wenn die Gefahr besteht, dass sich die unlöslichen Erdalkalisalze auf dem Gewebe oder auf Teilen der Waschmaschine niederschlagen. Nach einer weiteren Methode werden die Natriumionen eines Ionenaustauschers gegen die Eralkaliionen der Waschlösung ausgetauscht.

Pentanatriumtriphosphat, $Na_5P_3O_{10}$, ist ein weitverbreiteter und sehr wirksamer Builder in Waschmittelformulierungen. Phosphate werden jedoch für die Eutrophierung von Flüssen und Seen, d.h. für eine Steigerung des Algenwachstums und des Sauerstoffverbrauchs, verantwortlich gemacht. Es sind deshalb in vielen Ländern gesetzliche Massnahmen getroffen worden, um den Anteil von Phosphaten in Waschmitteln zu beschränken.

Ein weiteres Komplexierungsmittel ist Trinatriumnitrilotriacetat, $3\ Na^+\ N(CH_2CO_2^-)_3$. Auch bei dieser Substanz bestehen ökologische Bedenken, da noch nicht genau bekannt ist, inwieweit das Nitrilotriacetat Schwermetalle aus Gesteinen der Flüsse und Seen herauslösen kann.

Als Ersatzstoff für diese komplexierenden Builder wird in den letzten Jahren Zeolith A verwendet. Der Zeolith vermag durch Ionenaustausch den $Ca^{2+}$-Gehalt zu vermindern, sein Mg-Bindevermögen ist jedoch gering.

Natriumsilikate werden schon seit langer Zeit in Waschmitteln eingesetzt. Ihre hauptsächliche Funktion ist darin zu sehen, dass sie $Na^+$-Ionen liefern und den pH-Wert erhöhen. In den handelsüblichen Waschmitteln werden nur amorphe Natriumsilikate der molaren Zusammensetzung $Na_2O:SiO_2$ von etwa 1:2 bis 1:3,3 verwendet. In der Patentliteratur, die den Einsatz von Natriumsilikaten in Waschmitteln zum Gegenstand hat, finden sich keine Hinweise darauf, dass kristalline Verbindungen mit einer entsprechenden Zusammensetzung eingesetzt werden sollen.

Kristalline Natriumsilikate mit einem $Na_2O:SiO_2$-Verhältnis von etwa 1:2 bis 1:4 sind zwar im Prinzip lange bekannt, jedoch sind sie nach den bekannten Verfahren wesentlich aufwendiger herzustellen als ihre amorphen Analoga. Im allgemeinen Gebrauch sind deshalb nur amorphe Silikate, die – in Form von Gläsern – wasserfrei sind oder als wasserhaltige Feststoffe angeboten werden. Schliesslich werden noch wässrige Silikat-Lösungen verwendet.

In der GB-A 1 141 032, Seite 1, Zeilen 12–23 ist offenbart, dass es bekannt sei, dem Wasser zur Verhinderung oder Verminderung von Inkrustationen und/oder Korrosion ein kristallines Natriumsilikat zuzufügen, was jedoch nur bei schwach saurem Wasser funktioniere. Es wird nicht angegeben, welche Zusammensetzung das Natriumsilikat hat und ob seine Zugabe der Wasserenthärtung dient.

Es bestand die Aufgabe, für den Einsatz als Wasserenthärtungsmittel Natriumsilikate mit besonders hoher Wirksamkeit aufzufinden.

Ein Gegenstand der vorliegenden Erfindung ist die Verwendung von Natriumsilikaten zur Enthärtung von Wasser, das Calcium und/oder Magnesium enthält, dadurch gekennzeichnet, dass es sich bei den Silikaten um kristalline schichtförmige Natriumsilikate der Zusammensetzung $NaMSi_xO_{2x+1} \cdot y\ H_2O$ handelt, wobei M Natrium oder Wasserstoff bedeutet und x eine Zahl von 1,9 bis 4 und y eine Zahl von 0 bis 20 ist.

Die erfindungsgemäss verwendeten kristallinen Natriumsilikate erweisen sich in rasterelektronenmikroskopischen Aufnahmen als schichtförmig.

Aus den bekannten Verbindungen der Formel $Na_2Si_xO_{2x+1} \cdot y\ H_2O$ lassen sich durch Behandlung mit Säuren und teilweise auch mit Wasser die entsprechenden Verbindungen $NaHSi_xO_{2x+1} \cdot y\ H_2O$ herstellen. Der durch die Zahl y angegebene Wassergehalt unterscheidet nicht zwischen Kristallwasser und anhaftendem Wasser. Vorzugsweise steht M für Natrium. Bevorzugte Werte für x sind 2 oder 3 oder 4. Besonders bevorzugt werden Verbindungen der Zusammensetzung $NaMSi_2O_5 \cdot y\ H_2O$. Da es sich bei den erfindungsgemäss eingesetzten Natriumsilikaten um kristalline Verbindungen handelt, lassen sie sich auch durch ihre Röntgenbeugungsdiagramme gut charakterisieren.

In dem angegebenen Bereich für x sind viele kristalline schichtförmige Natriumsilikate bekannt, die erfindungsgemäss eingesetzt werden können.

Beim Joint Commitee on Powder Diffraction Standards sind unter den folgenden Nummern Röntgenbeugungsdiagramme von entsprechenden Natriumsilikaten aufgeführt: 18-1241, 22-1397, 22-1397A, 19-1233, 19-1234, 19-1237, 23-529, 24-1123, 24-1123A, 29-1261, 18-1242, 22-1395, 19-1235, 22-1396, 19-1236, 18-1240, 19-1232, 18-1239, 12-102, 23-703, 25-1309, 27-708, 27-709.

In den Tabellen 1 bis 7 sind die charakteristischen Röntgenbeugungsreflexe von kristallinen schichtförmigen Natriumsilikaten angegeben, die sich mit Erfolg erfindungsgemäss einsetzen lassen.

Im Vergleich zu den gebräuchlichen amorphen Natriumsilikaten zeigen einige kristalline schichtförmige Natriumsilikate ein deutlich erhöhtes Kalkbindevermögen. Dies gilt z.B. für die Silikate der Tabellen 1 und 3, und insbesondere für das Natriumsilikat der Tabelle 2. Die kristallinen schichtförmigen Natriumsilikate können die amorphen Wassergläser oder Wasserglaslösungen in Wasch- und Reinigungsmitteln ersetzen. Sie können aber auch ergänzend verwendet werden.

Die kristallinen schichtförmigen Natriumsilikate sind in Abhängigkeit von ihrem Natriumgehalt teilweise nur begrenzt wasserlöslich oder sogar schwerlöslich.

Die im Vergleich zu amorphen Silikaten gleicher Zusammensetzung erhöhten wasserenthärtenden Eigenschaften sind vermutlich auf den kristallinen, schichtförmigen Aufbau und auf den erhöhten Polymerisationsgrad des Silikatgerüsts zurückzuführen.

Der unerwartete Einfluss der Kristallstruktur auf das Kalkbindevermögen zeigt sich darin, dass bei gleicher analytischer Zusammensetzung deutlich unterschiedliche Werte in Abhängigkeit vom kristallinen Aufbau (zu identifizieren durch das Röntgenbeugungsdiagramm) erhalten werden.

In den Tabellen 1 bis 7 sind charakteristische Röntgenbeugungsreflexe (d-Werte in $10^{-8}$ cm) von kristallinen Natriumschichtsilikaten, die erfindungsgemäss eingesetzt werden können, aufgeführt. Besonders bevorzugt ist das Silikat gemäss Tabelle 2.

Die relativen Intensitäten werden in den Tabellen 1 bis 7 als sst (sehr stark = 75 bis 100), st (stark = 50 bis 75), m (mittel = 25 bis 50) und schw (schwach = 0 bis 25) angegeben.

Es gehört zu den charakteristischen Eigenschaften der erfindungsgemäss eingesetzten Natriumsilikate, dass sie mit Mineralsäuren in die entsprechenden freien Kieselsäuren überführt werden können. Sie verlieren dabei teilweise ihre Kristallinität.

Durch potentiometrische Titration mit einer Mineralsäure in wässriger Lösung, vorzugsweise an feuchten Proben, lässt sich die Ionenaustauschkapazität des Natriumsilikats bestimmen. Durch parallele Bestimmung des Trocknungsverlustes lassen sich die gefundenen Werte auf getrocknetes Produkt umrechnen.

Zur Wasserenthärtung werden bevorzugt Natriumsilikate eingesetzt, die nach dieser Bestimmungsmethode Ionenaustauschwerte von 400 bis 1200 mmol Na$^+$/100 g trockenes Silikat liefern. Besonders bevorzugt sind jene Silikate, die im wasserfreien Zustand etwa der Formel $NaHSi_2O_5$ entsprechen und eine Austauschkapazität von etwa 500 bis 600 mmol Na$^+$/100 g Produkt haben. Diese Produkte bestehen im wesentlichen aus $NaHSi_2O_5$. Bevorzugt sind ferner jene Produkte, die etwa der Formel $Na_2Si_2O_5$ und eine Austauschkapazität von etwa 1000 bis 1100 mmol Na$^+$/100 g haben. Diese Produkte bestehen im wesentlichen aus $Na_2Si_2O_5$.

Es können kristalline schichtförmige Natriumsilikate natürlichen Ursprungs, aber auch synthetische Produkte eingesetzt werden.

Die Herstellung der kristallinen Silikate kann aus amorphen glasartigen Natriumsilikaten erfolgen und wird beispielsweise in Phys. Chem. Glasses, 7, 127-138 (1966) und Z. Kristallogr., 129, 396-404 (1969) beschrieben. Auch andere Synthesewege sind möglich.

Insbesondere Na-SKS-6, welches dem $\delta$-$Na_2Si_2O_5$ ähnelt, und Na-SKS-7, welches dem $\beta$-$Na_2Si_2O_5$ ähnelt, sind zur Wasserenthärtung geeignet. Weiterhin können auch natürliche kristalline Silikate der Formel $Na_2Si_2O_5$, wie Natrosilit, eingesetzt werden, und auch hydratisierte Silikate, wie der Kanemit, $NaHSi_2O_5 \cdot y\ H_2O$. Für die Enthärtungswirkung ist der Kristallwasser-Gehalt und das anhaftende Wasser unwesentlich. Daher werden Natriumsilikate bevorzugt, in denen y für 0 bis 2, insbesondere 0, steht.

Die kristallinen schichtförmigen Silikate können in reiner Form oder als Gemisch verschiedener Silikate eingesetzt werden. Es ist von Vorteil, dass sie auch in Gegenwart von beliebigen anderen Wasserenthärtungsmitteln verwendet werden können, beispielsweise zusammen mit Pentanatriumtriphosphat, Trinatriumnitrilotrisulfonat und/oder Zeolith A; aber auch Phosphonate, Polycarboxylate oder andere amorphe oder kristalline Silikate sowie Mischungen der erwähnten oder anderer Wasserenthärtungsmittel können zusammen mit den kristallinen Natriumsilikaten verwendet werden.

Die kristallinen schichtförmigen Natriumsilikate können auch durch Ionenaustausch aus entsprechenden kristallinen freien Kieselsäuren oder entsprechenden anderen Alkalisilikaten, insbesondere Kalium- und Lithiumsilikaten, mit Schichtstruktur hergestellt werden. Dieser Ionenaustausch kann auch während der Enthärtung von Wasser erfolgen, sofern Natriumionen im Überschuss vorhanden sind. Dies ist z.B. bei Einsatz der meisten Textil-Waschmittel der Fall.

Die Kristallgrösse der erfindungsgemäss eingesetzten Natriumsilikate kann in weiten Grenzen schwanken. Diese Silikate können eine Grösse von etwa 0,01 μm bis etwa 1000 μm, bevorzugt von 0,1-10 μm haben. Es ist ein Vorteil der kristallinen schichtförmigen Natriumsilikate, dass sie insbesondere im alkalischen Bereich der Waschlauge bei einem pH-Wert von etwa 9-12 sowie in

Gegenwart von Na⁺-Ionen gut wirksam sind. Dies gilt auch für Waschlaugen, die einen deutlich kleineren Gehalt als etwa 350 mg CaO/l bzw. etwa 144 mg MgO/l haben. Auch die Anwesenheit grösserer Na⁺-Konzentrationen, die in Waschmitteln üblich sind, verringert die wasserenthärtende Wirksamkeit der erfindungsgemässen Natriumsilikate nur unwesentlich.

Deshalb lassen sich die kristallinen schichtförmigen Natriumsilikate vorteilhafterweise in Wasch- und Reinigungsmitteln (insbesondere Geschirrspülmitteln) als Builder einsetzen. Die Gegenwart von Tensiden beeinträchtigt die Wirkung der Natriumsilikate nicht. Wasch- und Reinigungsmittel, die solche Natriumsilikate als Builder und ausserdem Tenside enthalten, sind ebenfalls Gegenstand der Erfindung.

Gegenstand der Erfindung ist weiterhin ein Verfahren zur Enthärtung von Wasser, das Calcium und/oder Magnesium-Ionen sowie Natriumionen enthält und einen pH-Wert von etwa 8 bis 12 aufweist durch Zusatz eines Natriumsilikates, dadurch gekennzeichnet, dass es sich bei Silikat um ein kristallines schichtförmiges Natriumsilikat der Zusammensetzung $NaMSi_xO_{2x+1} \cdot y\,H_2O$ handelt, wobei M Natrium oder Wasserstoff bedeutet und x eine Zahl von 1,9 bis 4 und y eine Zahl von 0 bis 20 ist. Bei diesem Enthärtungsverfahren wird die Reaktionsmischung vorzugsweise in Bewegung gehalten.

Die Wirksamkeit des erfindungsgemäss eingesetzten Wasserenthärtungsmittels sowie des Verfahrens zur Enthärtung von Wasser lässt sich dadurch überprüfen, dass eine Calcium- bzw. Magnesiumchloridlösung mit verdünnter Natronlauge auf einen pH-Wert von 10 eingestellt und mit dem Mittel versetzt wird. Die erhaltene Suspension wird im allgemeinen 15 Minuten bei Raumtemperatur (etwa 22–26°C) gerührt, danach wird der in der Suspension vorhandene Feststoff abfiltriert. Anschliessend bestimmt man die Resthärte des Filtrats und errechnet aus der Differenz zur Ausgangshärte die Verminderung der $Ca^{2+}$- bzw. $Mg^{2+}$-Konzentration, die mit der Einwaage des erfindungsgemässen Wasserenthärtungsmittels in Beziehung gesetzt wird. Bei der Einwaage wird ein vorhandener Wasseranteil des Wasserenthärtungsmittels miterfasst, der sich durch Trocknung bei 400°C ermitteln lässt. Man erhält so das Ca- bzw. Mg-Bindevermögen, welches in mg CaO bzw. mg MgO pro g kristallines schichtförmiges Natriumsilikat (wasserfrei) angegeben wird. Die folgende Gleichung zeigt, wie das Ca-Bindevermögen berechnet wird.

Bei dieser Bestimmungsmethode wird nur der Anteil der Wasserenthärtung erfasst, der durch Ionenaustausch und ggf. durch Fällung verursacht worden ist. Nicht erfasst wird die komplexierende Wirkung des gelösten kristallinen schichtförmigen Natriumsilikats, welche insbesondere bei geringeren pH-Werten an Bedeutung gewinnen kann. Die tatsächliche wasserenthärtende Wirkung ist deshalb grösser als durch diese Bestimmungsmethode ermittelt wird.

Die Grösse des Ca- und Mg-Bindevermögens ist sowohl von der Erdalkalikonzentration der Ausgangslösung, von der Einwaage bzw., damit verbunden, der angestrebten Resthärte, der Temperatur, vom pH-Wert, der Korngrösse des Silikats, der Applikationsform (gelöst, als Hydrat, wasserfrei, sprühgetrocknet mit anderen Substanzen usw.), der Austauschdauer, dem Natriumgehalt des Silikates und insbesondere von der Kristallstruktur abhängig. Bevorzugt sind pH-Werte von 9,5–11,5.

Für die Austauschdauer existiert im allgemeinen ein Optimum, da in wässriger Lösung eine langsame Hydrolyse des Silikats stattfindet. Vorzugsweise wird man das Silikat 5 bis 240 min, insbesondere 10–60 min mit dem zu enthärtenden Wasser in Kontakt bringen. Die Menge Natriumsilikat muss für eine vollständige Enthärtung (falls weitere Enthärtungsmittel fehlen) den Härtebestandteilen mindestens äquivalent sein. Grössenordnungsmässig enthält das zu enthärtende Wasser 10–200 mg MgO/l und 50–500 mg CaO/l, insbesondere 20–100 mg MgO/l und 60–350 mg CaO/l. Ein hoher Natriumgehalt des kristallinen Natriumsilikats bedeutet im allgemeinen auch eine hohe spezifische Austauschkapazität.

Grundsätzlich wird der Wert des Calcium- bzw. Magnesium-Bindevermögens, bezogen auf die Einwaage, durch hohe Ausgangskonzentrationen an Calcium- und Magnesium-Ionen erhöht. Bei vergleichenden Untersuchungen der Wasserenthärtung ist es daher wichtig zu beachten, welche Ausgangshärte gewählt wurde. Entscheidend ist weiterhin die angestrebte Resthärte; damit gekoppelt ist die notwendige Menge an kristallinem schichtförmigem Natriumsilikat, das zugesetzt werden muss. Es hat sich gezeigt, dass zur Verminderung einer kleinen Resthärte eine überproportionale Menge Wasserenthärtungsmittel zugesetzt werden muss.

Bei Zusatz von 500 mg kristallinem $Na_2Si_2O_5$, welches charakteristische Röntgenbeugungsreflexe bei $(3,97 \pm 0,08) \cdot 10^{-8}$ cm sowie $(2,43 \pm 0,5) \cdot 10^{-8}$ cm (mit geringerer Intensität) hat

$$Ca\text{-Bindevermögen} = \frac{mg\ CaO\ (\text{Ausgangslösung}) - mg\ CaO\ (\text{Resthärte})}{\text{Einwaage krist. schichtf. Natriumsilikat (wasserfrei)}}$$

(Na-SKS-6), zu 1 l wässriger Lösung, die etwa 300 mg CaO enthält und einen pH-Wert von 10 hat, wird bei Raumtemperatur nach der beschriebenen Bestimmungsmethode ein Ca-Bindevermögen von etwa 150 bis nahezu 200 mg CaO/g kristallinem $Na_2Si_2O_5$ ermittelt. Wird 1 l einer wässrigen Lösung, die etwa 200 mg MgO enthält und einen pH-Wert von 10 hat, mit etwa 500 mg kristallinem $Na_2Si_2O_5$ versetzt, so kann eine Reduzierung der gelösten $Mg^{2+}$-Ionen erreicht werden, die einem Mg-Bindevermögen von etwa 160–170 mg MgO/g $Na_2Si_2O_5$ entspricht.

Die Erfindung wird durch die folgenden Beispiele näher erläutert.

Beispiele

Die untersuchten kristallinen Natriumsilikate der Zusammensetzung $Na_2Si_2O_5$ zeigen die in den Tabellen 11 bis 16 aufgeführten Röntgenbeugungsdiagramme. Die Proben 1 bis 4 wurden durch Kristallisation von röntgenamorphem Natriumsilikat des Moduls (Molverhältnis $SiO_2/Na_2O$) 2,0 bei 550 bis 800°C hergestellt. Der zum Vergleich untersuchte Zeolith A (Natriumform) hat einen Wassergehalt von 17,1%; sein Röntgenbeugungsdiagramm ist in Tabelle 13 aufgeführt.

Das Kalzium- bzw. Magnesium-Bindevermögen wurde bestimmt, indem zu einer CaCl₂-Lösung bzw. MgCl₂-Lösung, die mit verdünnter Natronlauge auf pH 10 eingestellt und deren Gehalt durch Titration mit EDTA-Lösung bestimmt worden war, eine bestimmte Menge des kristallinen Silikats gegeben wurde. Die Reaktionsmischung wurde im allgemeinen 15 Minuten gerührt und anschliessend über ein Blauband-Filter filtriert. Im Filtrat wurde der Gehalt an Kalzium- bzw. Magnesium-Ionen durch Titration mit EDTA bestimmt. Bei dieser Bestimmungsmethode werden lösliche Komplexe des Wasserenthärtungsmittels mit den Magnesium- und den Kalzium-Ionen nicht von diesen Ionen unterschieden. Die tatsächliche Wasserenthärtung ist deshalb grösser, als sie nach dieser Methode gefunden und in den Tabellen angegeben wird. Die Versuchsergebnisse sind in den Tabellen 8 und 9 aufgeführt.

Diese Ergebnisse zeigen, dass die untersuchten kristallinen Natriumsilikate der Zusammensetzung $Na_2Si_2O_5$ beim Kalziumbindevermögen etwa ein gleich gutes Ergebnis liefern wie Zeolith A, diesem teilweise sogar überlegen sind. Eine deutliche Überlegenheit zeigt sich gegenüber Zeolith A beim Magnesium-Bindevermögen.

In Tabelle 10 sind die Ergebnisse aufgeführt, die bei der Bestimmung des Kalzium-Bindevermögens einer Kombination des erfindungsgemäss eingesetzten Wasserenthärtungsmittels mit anderen Wasserenthärtungsmitteln erhalten wurden. Der Vergleich von Beispiel 22 mit 21 und Beispiel 24 mit 23 zeigt jeweils, dass durch den Zusatz von kristallinem $Na_2Si_2O_5$ die Gesamtwirkung der Wasserenthärtung deutlich erhöht wird.

Ferner wurde geprüft, ob die kristallinen Natriumsilikate auch nach starker Beanspruchung unter Hydrolysebedingungen noch ein Bindevermögen für Kalzium zeigen. In Beispiel 25 wurden 200 ml der Probe 2 in 10 ml entionisiertem Wasser aufgekocht. Dabei löste sich die Substanz zu einer leicht trüben Lösung. Nach dem Abkühlen wurde diese zu 200 ml einer Kalziumlösung entsprechend Beispiel 8 gegeben. Es wurde ein Kalzium-Bindevermögen von 111 mg CaO/g Probe 2 gefunden.

Ein kristallines Hydrolyseprodukt von Probe 2 einer Zusammensetzung von etwa $NaHSi_2O_5 \cdot y$ $H_2O$ wurde erhalten, als die Probe 2 mit Wasser aufgeschlämmt, filtriert und getrocknet wurde. Das Röntgenbeugungsdiagramm des bei 105°C getrockneten Produktes wird in Tabelle 16 aufgeführt. Die Substanz hat unter den Bedingungen von Beispiel 8 ein Kalziumbindevermögen von 124 mg CaO/g.

Ein röntgenamorphes Natriumsilikat mit gleicher Zusammensetzung wie die Proben 1 bis 4 wird erhalten, wenn Wasserglaslösung mit einem Molverhältnis von $SiO_2/Na_2O$ von etwa 2,06:1 zwei Stunden auf 500°C erhitzt wird. Bei einer analogen Bestimmung des Kalziumbindevermögens wurden Werte von 0 bis 40 mg CaO/g amorphes Silikat erhalten (vgl. Beispiel 26).

Tabelle 1

Na-SKS-5

| d ($10^{-8}$ cm) | | rel. Intensität |
|---|---|---|
| 4,92 | (± 0,10 | m–st |
| 3,95 | (± 0,08) | schw |
| 3,85 | (± 0,08) | m–st |
| 3,77 | (± 0,08) | st–st |
| 3,29 | (± 0,07) | sst |
| 3,20 | (± 0,06) | schw |
| 2,64 | (± 0,05) | schw–m |
| 2,53 | (± 0,05) | schw |
| 2,45 | (± 0,05) | m–st |
| 2,41 | (± 0,05) | schw |
| 2,38 | (± 0,05) | schw |

Tabelle 2

Na-SKS-6

| d ($10^{-8}$ cm) | | rel. Intensität |
|---|---|---|
| 4,92 | (± 0,10) | schw |
| 3,97 | (± 0,08) | sst |
| 3,79 | (± 0,08) | m–st |
| 3,31 | (± 0,07) | schw |
| 3,02 | (± 0,06) | schw–m |
| 2,85 | (± 0,06) | schw |
| 2,65 | (± 0,05) | schw |
| 2,49 | (± 0,05) | schw |
| 2,43 | (± 0,05) | m |

Tabelle 3

Na-SKS-7

| d ($10^{-8}$ cm) | | rel. Intensität |
|---|---|---|
| 7,96 | (± 0,16) | schw |
| 6,00 | (± 0,12) | st–sst |
| 5,48 | (± 0,11) | schw |
| 4,92 | (± 0,11) | schw |
| 4,30 | (± 0,09) | m |
| 4,15 | (± 0,08) | st |
| 3,96 | (± 0,08) | st–sst |
| 3,78 | (± 0,08) | m–st |
| 3,63 | (± 0,07) | sst |
| 3,31 | (± 0,07) | schw |
| 3,12 | (± 0,06) | schw–m |

Tabelle 3 (Fortsetzung)

Na-SKS-7

| d ($10^{-8}$ cm) | | rel. Intensität |
|---|---|---|
| 3,08 | ($\pm$ 0,06) | schw–m |
| 3,06 | ($\pm$ 0,06) | m–st |
| 2,97 | ($\pm$ 0,06) | st–sst |
| 2,85 | ($\pm$ 0,06) | schw |
| 2,70 | ($\pm$ 0,05) | schw–m |
| 2,66 | ($\pm$ 0,05) | m–st |
| 2,63 | ($\pm$ 0,05) | schw |
| 2,59 | ($\pm$ 0,06) | schw–m |
| 2,54 | ($\pm$ 0,05) | schw–m |
| 2,43 | ($\pm$ 0,05) | sst |

Tabelle 4

Na-SKS-11

| d ($10^{-8}$ cm) | | rel. Intensität |
|---|---|---|
| 6,08 | ($\pm$ 0,12) | schw |
| 5,88 | ($\pm$ 0,12) | schw–m |
| 4,22 | ($\pm$ 0,08) | sst |
| 3,26 | ($\pm$ 0,07) | schw–m |
| 3,03 | ($\pm$ 0,06) | schw–m |
| 2,94 | ($\pm$ 0,06) | m |
| 2,89 | ($\pm$ 0,06) | schw |
| 2,64 | ($\pm$ 0,05) | schw–m |
| 2,56 | ($\pm$ 0,05) | schw–m |
| 2,49 | ($\pm$ 0,05) | schw |
| 2,43 | ($\pm$ 0,05) | schw |

Tabelle 5

Na-SKS-9

| d ($10^{-8}$ cm | | rel. Intensität |
|---|---|---|
| 7,79 | ($\pm$ 0,16) | m–sst |
| 4,68 | ($\pm$ 0,09) | m–sst |
| 4,06 | ($\pm$ 0,08) | schw–m |
| 3,94 | ($\pm$ 0,08) | schw–m |
| 3,86 | ($\pm$ 0,08) | schw–m |
| 3,62 | ($\pm$ 0,07) | sst |
| 3,55 | ($\pm$ 0,07) | st–sst |
| 3,53 | ($\pm$ 0,07) | st–sst |
| 3,26 | ($\pm$ 0,07) | schw–m |
| 3,18 | ($\pm$ 0,06) | schw–m |
| 2,72 | ($\pm$ 0,05) | schw–m |
| 2,46 | ($\pm$ 0,05) | schw–m |

Tabelle 6

Na-SKS-10

| d ($10^{-8}$ cm) | | rel. Intensität |
|---|---|---|
| 10,3 | ($\pm$ 0,21) | m–sst |
| 5,17 | ($\pm$ 0,10) | schw–m |
| 4,02 | ($\pm$ 0,08) | sst |
| 3,65 | ($\pm$ 0,07) | m–st |
| 3,45 | ($\pm$ 0,07) | m–sst |

Tabelle 6 (Fortsetzung)

Na-SKS-10

| d ($10^{-8}$ cm) | | rel. Intensität |
|---|---|---|
| 3,17 | ($\pm$ 0,06) | m–sst |
| 3,11 | ($\pm$ 0,06) | schw–st |
| 2,48 | ($\pm$ 0,05) | m–sst |
| 2,33 | ($\pm$ 0,05) | schw–m |
| 2,01 | ($\pm$ 0,04) | schw–m |

Tabelle 7

Na-SKS-13

| d ($10^{-8}$ cm) | | rel. Intensität |
|---|---|---|
| 6,37 | ($\pm$ 0,13) | m–st |
| 4,04 | ($\pm$ 0,08) | m–st |
| 3,87 | ($\pm$ 0,08) | sst |
| 3,58 | ($\pm$ 0,07) | m–st |
| 3,20 | ($\pm$ 0,06) | schw–m |
| 3,04 | ($\pm$ 0,06) | schw–m |
| 2,67 | ($\pm$ 0,05) | schw–m |
| 2,45 | ($\pm$ 0,05) | schw–m |
| 2,31 | ($\pm$ 0,05) | schw–m |

Na-SKS-5 lässt sich herstellen gemäss Glastechn. Ber. 37, 194–200 (1964). Das röntgenspektrum hat die Nummern 18-1241 und 22-1397. Das Produkt hat die ungefähre Zusammensetzung $Na_2Si_2O_5$. Es ähnelt im Röntgenbeugungsdiagramm $\alpha$-$Na_2Si_2O_5$. Probe 4 entspricht Na-SKS-5 mit geringen Verunreinigungen an Na-SKS-6.

Na-SKS-6 lässt sich herstellen gemäss Zeitschrift für Kristallogr. 129, 396–404 (1969). Es hat die ungefähre Zusammensetzung $Na_2Si_2O_5$ und ähnelt $\delta$-$Na_2Si_2O_5$. Proben 1 und 2 entsprechen Na-SKS-6.

Na-SKS-7 lässt sich herstellen gemäss Glastechn. Ber. 37, 194–200 (1964). Es ähnelt $\beta$-$Na_2Si_2O_5$. Probe 3 entspricht Na-SKS-7.

Na-SKS-11 lässt sich herstellen gemäss Glastech. Ber. 37, 194–200 (1964), sowie gemäss Zeitschrift für Kristallogr. 129, 396–404 (1969). Es ähnelt $\gamma$-$Na_2Si_2O_5$.

Na-SKS-9 lässt sich herstellen gemäss Bull. Soc. franc. Min. Crist., 95, 371–382 (1972). Es weist die ungefähre Zusammensetzung $NaHSi_2O_5 \cdot H_2O$ auf. Das Röntgenspektrum hat die Nummer 27-709. Das Hydrolyseprodukt von Probe 2 entspricht Na-SKS-9.

Na-SKS-10 lässt sich herstellen gemäss Bull. Soc. franc. Min. Crist., 95, 371–382 (1972) sowie gemäss Amer. Mineral., 62, 763–771 (1977). Das Röntgenspektrum hat die Nummer 25-1309. Das Produkt hat die ungefähre Zusammensetzung $NaHSi_2O_5 \cdot 2 H_2O$. Es ähnelt dem Mineral Kanemit.

Na-SKS-13 lässt sich herstellen gemäss Bull. Soc. franc. Min., Crist., 95, 371–382 (1972). Das Röntgenspektrum hat die Nummer 27-708. Das Produkt hat die ungefähre Zusammensetzung $NaHSi_2O_5$.

Tabelle 8

Versuchsergebnisse zur Wasserenthärtung (Ca-Bindevermögen) von kristallinem $Na_2Si_2O_5$

| Nr. des Beispiels | Probe | Einwaage (mg) (wasserfrei) | Konz. der Ausgangslsg. (mg CaO/l) | Menge der Ausgangslsg. (ml) | Temp. (°C) | Dauer (min.) | Konz. der Lsg. nach Filtration (mg CaO/l) | Ca-Bindevermögen (mg CaO/g $Na_2Si_2O_5$) |
|---|---|---|---|---|---|---|---|---|
| 1* | Zeolith A | 396 | 294 | 500 | 22–26 | 15 | 162 | 167 |
| 2* | Zeolith A | 462 | 289 | 985 | 90 | 15 | 213 | 163 |
| 3* | Zeolith A | 200 | 294 | 200 | 22–26 | 15 | 133 | 161 |
| 4* | Zeolith A | 413 | 98** | 1000 | 22–26 | 15 | 52 | 111 |
| 5 | 1 | 533 | 316 | 1000 | 22–26 | 15 | 216 | 187 |
| 6 | 1 | 235 | 98** | 1000 | 22–26 | 15 | 77 | 86 |
| 7 | 1 | 489 | 292 | 1000 | 90 | 15 | 211 | 164 |
| 8 | 2 | 200 | 294 | 200 | 22–26 | 15 | 128 | 166 |
| 9 | 2 | 533 | 316 | 1000 | 22–26 | 15 | 221 | 178 |
| 10 | 3 | 520 | 306 | 1000 | 22–26 | 15 | 221 | 164 |
| 11 | 3 | 512 | 306 | 1000 | 22–26 | 18h | 233 | 142 |
| 12 | 3 | 462 | 306 | 1000 | 90 | 15 | 212 | 205 |
| 13 | 3 | 997 | 316 | 500 | 22–26 | 25 | 27 | 131 |
| 14 | 4 | 351 | 292 | 1000 | 22–26 | 15 | 259 | 94 |

*Vergleichsbeispiele  **Ausgangslösung enthält zusätzliche 2 g Na⁺/l, Proben 1 und 2 entsprechen Na-SKS-6 (zwei verschiedenen Chargen), Probe 3 entspricht Na-SKS-7, Probe 4 entspricht Na-SKS-5

Tabelle 9

Versuchsergebnisse zur Wasserenthärtung (Mg-Bindevermögen) von kristallinem $Na_2Si_2O_5$

| Nr. des Beispiels | Probe | Einwaage (mg) (wasserfrei) | Konz. der Ausgangslsg. (mg MgO/l) | Menge der Ausgangslsg. (ml) | Temp. (°C) | Dauer (min.) | Konz. der Lsg. nach Filtration (mg MgO/l) | Mg-Bindevermögen (mg MgO/g $Na_2Si_2O_5$) |
|---|---|---|---|---|---|---|---|---|
| 15* | Zeolith A | 413 | 198 | 1000 | 22–26 | 15 | 186 | 29 |
| 16* | Zeolith A | 445 | 72 | 1000 | 22–26 | 15 | 71 | 2 |
| 17* | Zeolith A | 200 | 72 | 200 | 22–26 | 15 | 72 | 0 |
| 18 | 1 | 545 | 198 | 1000 | 22–26 | 15 | 105 | 171 |
| 19 | 3 | 536 | 198 | 1000 | 22–26 | 15 | 108 | 167 |
| 20 | 3 | 200 | 72 | 200 | 22–26 | 15 | 10 | 61 |

*Vergleichsbeispiele

EP 0 164 514 B1

Tabelle 10

Versuchsergebnisse zur Wasserenthärtung (Ca-Bindevermögen) von kristallinem Natriumsilikat mit anderen Wasserenthärtungsmitteln

| Nr. des Beispiels | Probe | Einwaage (mg) (wasserfrei) | Konz. der Ausgangslsg. (mg CaO/l) | Menge der Ausgangslsg. (ml) | Temp. (°C) | Dauer (min.) | Konz. der Lösung nach Filtration (mg CaO/l) |
|---|---|---|---|---|---|---|---|
| 21* | Zeolith A | 100 | 294 | 200 | 22–26 | 15 | 196 |
| 22 | Zeolith A | 100 | 294 | 200 | 22–26 | 15 | 135 |
| | 2 | 100 | | | | | |
| 23* | NTPP** | 100 | 294 | 200 | 22–26 | 15 | 125 |
| 24 | NTPP** | 100 | 294 | 200 | 22–26 | 15 | 20 |
| | 2 | 100 | | | | | |
| 25 | 2 | 200 | 280 | 210 | 22–26 | 15 | 173 |
| 26* | hydrolys. Na-Silikat amorph (S. 12) | 200 | 287 | 200 | 22–26 | 15 | 276 |

*Vergleichsbeispiele     **Pentanatriumtriphosphat (wasserfrei gerechnet)

Tabelle 11

Probe 1

| 2 THETA | d (10⁻⁸ cm) | I/I$_o$ |
|---|---|---|
| 4,30 | 20,5 | 3 |
| 12,80 | 6,91 | 3 |
| 14,60 | 6,06 | 18 |
| 18,00 | 4,92 | 14 |
| 19,70 | 4,50 | 1 |
| 20,70 | 4,29 | 3 |
| 21,10 | 4,21 | 13 |
| 21,40 | 4,15 | 6 |
| 21,80 | 4,07 | 8 |
| 22,40 | 3,97 | 100 |
| 23,00 | 3,86 | 9 |
| 23,45 | 3,79 | 52 |
| 24,45 | 3,64 | 15 |
| 25,80 | 3,45 | 9 |
| 26,95 | 3,31 | 10 |
| 27,80 | 3,21 | 2 |
| 28,75 | 3,10 | 8 |
| 29,15 | 3,06 | 4 |
| 29,55 | 3,02 | 24 |
| 30,05 | 2,97 | 5 |
| 30,75 | 2,91 | 10 |
| 31,45 | 2,84 | 17 |
| 32,85 | 2,72 | 5 |
| 33,30 | 2,69 | 1 |
| 33,75 | 2,65 | 4 |
| 34,70 | 2,58 | 2 |
| 34,95 | 2,57 | 7 |
| 35,35 | 2,54 | 9 |
| 36,00 | 2,49 | 11 |
| 36,60 | 2,45 | 6 |
| 37,00 | 2,43 | 40 |
| 37,95 | 2,37 | 2 |
| 39,15 | 2,30 | 4 |

Tabelle 12

Probe 2

| 2 THETA | d (10⁻⁸ cm) | I/I$_o$ |
|---|---|---|
| 12,80 | 6,91 | 3 |
| 14,60 | 6,06 | 9 |
| 18,00 | 4,92 | 12 |
| 21,10 | 4,21 | 13 |
| 21,70 | 4,09 | 4 |
| 22,40 | 3,97 | 100 |
| 23,00 | 3,86 | 6 |
| 23,45 | 3,79 | 38 |
| 24,40 | 3,64 | 8 |
| 25,80 | 3,45 | 8 |
| 26,90 · | 3,31 | 9 |
| 27,70 | 3,22 | 2 |

## Tabelle 12 (Fortsetzung)

Probe 2

| 2 THETA | d $(10^{-8}\,cm)$ | $I/I_o$ |
|---|---|---|
| 28,70 | 3,11 | 5 |
| 29,50 | 3,03 | 15 |
| 30,70 | 2,91 | 8 |
| 31,40 | 2,85 | 11 |
| 32,80 | 2,73 | 5 |
| 33,80 | 2,65 | 2 |
| 34,90 | 2,57 | 5 |
| 35,30 | 2,54 | 5 |
| 35,95 | 2,50 | 10 |
| 36,50 | 2,46 | 4 |
| 37,00 | 2,43 | 36 |
| 37,95 | 2,37 | 3 |
| 39,20 | 2,30 | 3 |

## Tabelle 13

Probe 3

| 2 THETA | d $(10^{-8}\,cm)$ | $I/I_o$ |
|---|---|---|
| 4,40 | 20,1 | 7 |
| 11,40 | 7,96 | 6 |
| 14,75 | 6,00 | 66 |
| 16,15 | 5,48 | 8 |
| 18,00 | 4,92 | 10 |
| 20,65 | 4,30 | 34 |
| 21,40 | 4,15 | 63 |
| 22,40 | 3,97 | 90 |
| 22,45 | 3,96 | 100 |
| 23,00 | 3,86 | 5 |
| 23,50 | 3,78 | 45 |
| 24,48 | 3,63 | 90 |
| 25,80 | 3,45 | 5 |
| 26,90 | 3,31 | 8 |
| 27,70 | 3,22 | 3 |
| 28,63 | 2,12 | 22 |
| 28,95 | 3,08 | 23 |
| 29,20 | 3,06 | 43 |
| 29,50 | 3,03 | 19 |
| 30,03 | 2,97 | 73 |
| 30,70 | 2,91 | 8 |
| 31,40 | 2,85 | 14 |
| 32,80 | 2,73 | 5 |
| 33,20 | 2,70 | 23 |
| 33,60 | 2,66 | 47 |
| 34,00 | 2,63 | 8 |
| 34,55 | 2,59 | 34 |
| 35,00 | 2,56 | 5 |
| 35,35 | 2,54 | 19 |
| 35,95 | 2,50 | 7 |
| 36,90 | 2,43 | 100 |
| 38,55 | 2,33 | 6 |
| 39,60 | 2,27 | 7 |

## Tabelle 14

Probe 4

| 2 THETA | d $(10^{-8}\,cm)$ | $I/I_o$ |
|---|---|---|
| 9,20 | 9,60 | 3 |
| 12,80 | 6,91 | 1 |
| 14,60 | 6,06 | 4 |
| 17,95 | 4,94 | 32 |
| 21,15 | 4,20 | 4 |
| 22,40 | 3,97 | 30 |
| 23,00 | 3,86 | 91 |
| 23,50 | 3,78 | 71 |
| 24,45 | 3,64 | 4 |
| 25,55 | 3,48 | 4 |
| 25,80 | 3,45 | 3 |
| 26,92 | 3,31 | 100 |
| 27,70 | 3,22 | 15 |
| 28,65 | 3,11 | 5 |
| 29,50 | 3,03 | 7 |
| 30,10 | 2,97 | 1 |
| 30,75 | 2,91 | 3 |
| 31,45 | 2,84 | 4 |
| 32,65 | 2,74 | 4 |
| 33,80 | 2,65 | 19 |
| 35,30 | 2,54 | 14 |
| 35,95 | 2,50 | 3 |
| 36,10 | 2,49 | 3 |
| 36,60 | 2,45 | 32 |
| 37,05 | 2,42 | 20 |
| 37,60 | 2,39 | 17 |

## Tabelle 15

Zeolith A

| 2 THETA | d $(10^{-8}\,cm)$ | $I/I_o$ |
|---|---|---|
| 7,10 | 12,4 | 63 |
| 10,10 | 8,75 | 47 |
| 12,40 | 7,13 | 50 |
| 16,05 | 5,52 | 40 |
| 17,60 | 5,03 | 3 |
| 20,35 | 4,36 | 11 |
| 21,30 | 4,17 | 7 |
| 21,60 | 4,11 | 58 |
| 22,75 | 3,91 | 7 |
| 23,90 | 3,72 | 90 |
| 25,00 | 3,56 | 1 |
| 26,05 | 3,42 | 27 |
| 27,05 | 3,29 | 79 |
| 28,95 | 3,08 | 4 |
| 29,90 | 2,99 | 100 |
| 30,75 | 2,91 | 16 |
| 32,50 | 2,75 | 23 |
| 33,30 | 2,69 | 7 |
| 34,10 | 2,63 | 61 |
| 35,70 | 2,51 | 11 |
| 36,45 | 2,46 | 9 |
| 37,95 | 2,37 | 6 |
| 40,05 | 2,25 | 6 |

### Tabelle 16

Hydrolyseprodukt von Probe 2

| 2 THETA | d ($10^{-8}$ cm) | $I/I_o$ |
|---|---|---|
| 11,35 | 7,79 | 55 |
| 16,60 | 5,34 | 3 |
| 16,90 | 5,24 | 4 |
| 18,95 | 4,68 | 43 |
| 19,90 | 4,46 | 6 |
| 20,50 | 4,33 | 9 |
| 21,90 | 4,06 | 17 |
| 22,55 | 3,94 | 17 |
| 23,00 | 3,86 | 17 |
| 24,60 | 3,62 | 100 |
| 25,05 | 3,55 | 82 |
| 25,20 | 3,53 | 82 |
| 27,30 | 3,26 | 28 |
| 28,00 | 3,18 | 16 |
| 23,90 | 2,72 | 25 |
| 36,55 | 2,46 | 24 |

### Patentansprüche

1. Verwendung von Natriumsilikaten zur Enthärtung von Wasser, das Calcium und/oder Magnesium enthält, dadurch gekennzeichnet, dass es sich bei den Silikaten um kristalline schichtförmige Natriumsilikate der Zusammensetzung $NaMSi_xO_{2x+1} \cdot y\,H_2O$ handelt, wobei M Natrium oder Wasserstoff bedeutet und x eine Zahl von 1,9 bis 4 und y eine Zahl von 0 bis 20 ist.

2. Verwendung nach Anspruch 1, dadurch gekennzeichnet, dass ein kristallines schichtförmiges Natriumsilikat eingesetzt wird, dessen charakteristische Reflexe im Röntgenbeugungsdiagramm einer der Tabellen 1 bis 7 entspricht:

### Tabelle 1

Na-SKS-5

| d ($10^{-8}$ cm) | | rel. Intensität |
|---|---|---|
| 4,92 | ($\pm$ 0,10) | m–st |
| 3,95 | ($\pm$ 0,08) | schw |
| 3,85 | ($\pm$ 0,08) | m–st |
| 3,77 | ($\pm$ 0,08) | st–sst |
| 3,29 | ($\pm$ 0,07) | sst |
| 3,20 | ($\pm$ 0,06) | schw |
| 2,64 | ($\pm$ 0,05) | schw–m |
| 2,53 | ($\pm$ 0,05) | schw |
| 2,45 | ($\pm$ 0,05) | m–st |
| 2,41 | ($\pm$ 0,05) | schw |
| 2,38 | ($\pm$ 0,05) | schw |

### Tabelle 2

Na-SKS-6

| d ($10^{-8}$ cm) | | rel. Intensität |
|---|---|---|
| 4,92 | ($\pm$ 0,10) | schw |
| 3,97 | ($\pm$ 0,08) | sst |
| 3,79 | ($\pm$ 0,08) | m–st |

### Tabelle 2 (Fortsetzung)

Na-SKS-13

| d ($10^{-8}$ cm) | | rel. Intensität |
|---|---|---|
| 3,31 | ($\pm$ 0,07) | schw |
| 3,02 | ($\pm$ 0,06) | schw–m |
| 2,85 | ($\pm$ 0,06) | schw |
| 2,65 | ($\pm$ 0,05) | schw |
| 2,49 | ($\pm$ 0,05) | schw |
| 2,43 | ($\pm$ 0,05) | m |

### Tabelle 3

Na-SKS-7

| d ($10^{-8}$ cm) | | rel. Intensität |
|---|---|---|
| 7,96 | ($\pm$ 0,16) | schw |
| 6,00 | ($\pm$ 0,12) | st–sst |
| 5,48 | ($\pm$ 0,11) | schw |
| 4,92 | ($\pm$ 0,11) | schw |
| 4,30 | ($\pm$ 0,09) | m |
| 4,15 | ($\pm$ 0,08) | st |
| 3,96 | ($\pm$ 0,08) | st–sst |
| 3,78 | ($\pm$ 0,08) | m–st |
| 3,63 | ($\pm$ 0,07) | sst |
| 3,31 | ($\pm$ 0,07) | schw |
| 3,12 | ($\pm$ 0,06) | schw–m |
| 3,08 | ($\pm$ 0,06) | schw–m |
| 3,06 | ($\pm$ 0,06) | m–st |
| 2,97 | ($\pm$ 0,06) | st–sst |
| 2,85 | ($\pm$ 0,06) | schw |
| 2,70 | ($\pm$ 0,05) | schw–m |
| 2,66 | ($\pm$ 0,05) | m–st |
| 2,63 | ($\pm$ 0,05) | schw |
| 2,59 | ($\pm$ 0,06) | schw–m |
| 2,54 | ($\pm$ 0,05) | schw–m |
| 2,43 | ($\pm$ 0,05) | sst |

### Tabelle 4

Na-SKS-11

| d ($10^{-8}$ cm) | | rel. Intensität |
|---|---|---|
| 6,08 | ($\pm$ 0,12) | schw |
| 5,88 | ($\pm$ 0,12) | schw–m |
| 4,22 | ($\pm$ 0,08) | sst |
| 3,26 | ($\pm$ 0,07) | schw–m |
| 3,03 | ($\pm$ 0,06) | schw–m |
| 2,94 | ($\pm$ 0,06) | m |
| 2,89 | ($\pm$ 0,06) | schw |
| 2,64 | ($\pm$ 0,05) | schw–m |
| 2,56 | ($\pm$ 0,05) | schw–m |
| 2,49 | ($\pm$ 0,05) | schw |
| 2,43 | ($\pm$ 0,05) | schw |

### Tabelle 5

Na-SKS-9

| d ($10^{-8}$ cm | | rel. Intensität |
|---|---|---|
| 7,79 | ($\pm$ 0,16) | m–sst |
| 4,68 | ($\pm$ 0,09) | m–sst |

Tabelle 5 (Fortsetzung)

Na-SKS-10

| d $(10^{-8}$ cm) | | rel. Intensität |
|---|---|---|
| 4,06 | (± 0,08) | schw–m |
| 3,94 | (± 0,08) | schw–m |
| 3,86 | (± 0,08) | schw–m |
| 3,62 | (± 0,07) | sst |
| 3,55 | (± 0,07) | st–sst |
| 3,53 | (± 0,07) | st–sst |
| 3,26 | (± 0,07) | schw–m |
| 3,18 | (± 0,06) | schw–m |
| 2,72 | (± 0,05) | schw–m |
| 2,46 | (± 0,05) | schw–m |

Tabelle 6

Na-SKS-10

| d $(10^{-8}$ cm) | | rel. Intensität |
|---|---|---|
| 10,3 | (± 0,21) | m–st |
| 5,17 | (± 0,10) | schw–m |
| 4,02 | (± 0,08) | sst |
| 3,65 | (± 0,07) | m–st |
| 3,45 | (± 0,07) | m–sst |
| 3,17 | (± 0,06) | m–sst |
| 3,11 | (± 0,06) | schw–st |
| 2,48 | (± 0,05) | m–sst |
| 2,33 | (± 0,05) | schw–m |
| 2,01 | (± 0,04) | schw–m |

Tabelle 7

Na-SKS-13

| d $(10^{-8}$ cm) | | rel. Intensität |
|---|---|---|
| 6,37 | (± 0,13) | m–st |
| 4,04 | (± 0,08) | m–st |
| 3,87 | (± 0,08) | sst |
| 3,58 | (± 0,07) | m–st |
| 3,20 | (± 0,06) | schw–m |
| 3,04 | (± 0,06) | schw–m |
| 2,67 | (± 0,05) | schw–m |
| 2,45 | (± 0,05) | schw–m |
| 2,31 | (± 0,05) | schw–m |

3. Verwendung gemäss Anspruch 1, dadurch gekennzeichnet, dass man ein kristallines schichtförmiges Natriumsilikat der Zusammensetzung NaMSi$_2$O$_5$·y H$_2$O einsetzt.

4. Verwendung gemäss Anspruch 1, dadurch gekennzeichnet, dass das kristalline schichtförmige Natriumsilikat eine Ionenaustauscherkapazität von 400 bis 1200 mmol Na$^+$/100 g Produkt (gerechnet als wasserfreie Substanz und ermittelt durch potentiometrische Titration mit Mineralsäure) hat.

5. Verwendung nach Anspruch 1, dadurch gekennzeichnet, dass das zu enthärtende Wasser bereits Natriumionen enthält und einen pH-Wert von 8 bis 12 aufweist.

6. Verfahren zur Enthärtung von Wasser, das Calcium und/oder Magnesium-Ionen sowie Natriumionen enthält und einen pH-Wert von etwa 8 bis 12 aufweist durch Zusatz eines Natriumsilikates, dadurch gekennzeichnet, dass es sich bei dem Silikat um ein kristallines schichtförmiges Natriumsilikat der Zusammensetzung NaMSi$_x$O$_{2x+1}$·y H$_2$O handelt, wobei M Natrium oder Wasserstoff bedeutet und x eine Zahl von 1,9 bis 4 und y eine Zahl von 0 bis 20 ist.

7. Verfahren gemäss Anspruch 7, dadurch gekennzeichnet, dass das zu enthärtende Wasser maximal 500 mg CaO/l und maximal 200 mg MgO/l enthält.

8. Verfahren nach Anspruch 7, dadurch gekennzeichnet, dass das schichtförmige Natriumsilikat in Kombination mit anderen Wasserenthärtungsmitteln eingesetzt wird.

9. Wasch- und Reinigungsmittel, enthaltend Tenside und Builder, dadurch gekennzeichnet, dass sie ein kristallines schichtförmiges Natriumsilikat der Zusammensetzung NaMSi$_x$O$_{2x+1}$· H$_2$O, wobei M Natrium oder Wasserstoff bedeutet und x eine Zahl von 1,9 bis 4 und y eine Zahl von 0 bis 20 ist, als Builder enthalten.

10. Mittel gemäss Anspruch 9, dadurch gekennzeichnet, dass es noch mindestens ein Wasserenthärtungsmittel der Gruppe bestehend aus Pentanatriumtriphosphat, Trinatriumnitrilotrisulfonat, Zeolith A, Phosphonate, Polycarboxylate, amorphe Silikate und andere kristalline Silikate enthält.

11. Mittel gemäss Anspruch 9, dadurch gekennzeichnet, dass das kristalline schichtförmige Natriumsilikat ein Röntgenbeugungsdiagramm aufweist, das beim Joint Committee on Powder Diffraction Standards unter den Nummern 18-1241, 22-1397, 22-1397A, 19-1233, 19-1234, 19-1237, 23-529, 24-1123, 24-1123A, 29-1261, 18-1242, 22-1395, 19-1235, 22-1396, 19-1236, 18-1240, 19-1232, 18-1239, 12-102, 23-703, 25-1309, 27-708 und 27-709 aufgeführt ist.

12. Mittel gemäss Anspruch 9, dadurch gekennzeichnet, dass ein kristallines schichtförmiges Natriumsilikat eingesetzt wird, dessen charakteristische Reflexe einer der Tabellen 1 bis 7 entspricht:

Tabelle 1

Na-SKS-5

| d $(10^{-8}$ cm) | | rel. Intensität |
|---|---|---|
| 4,92 | (± 0,10 | m–st |
| 3,95 | (± 0,08) | schw |
| 3,85 | (± 0,08) | m–st |
| 3,77 | (± 0,08) | st–st |
| 3,29 | (± 0,07) | sst |
| 3,20 | (± 0,06) | schw |
| 2,64 | (± 0,05) | schw–m |
| 2,53 | (± 0,05) | schw |
| 2,45 | (± 0,05) | m–st |
| 2,41 | (± 0,05) | schw |
| 2,38 | (± 0,05) | schw |

## Tabelle 2

### Na-SKS-6

| d ($10^{-8}$ cm) | | rel. Intensität |
|---|---|---|
| 4,92 | (± 0,10) | schw |
| 3,97 | (± 0,08) | sst |
| 3,79 | (± 0,08) | m–st |
| 3,31 | (± 0,07) | schw |
| 3,02 | (± 0,06) | schw–m |
| 2,85 | (± 0,06) | schw |
| 2,65 | (± 0,05) | schw |
| 2,49 | (± 0,05) | schw |
| 2,43 | (± 0,05) | m |

## Tabelle 3

### Na-SKS-7

| d ($10^{-8}$ cm) | | rel. Intensität |
|---|---|---|
| 7,96 | (± 0,16) | schw |
| 6,00 | (± 0,12) | st–sst |
| 5,48 | (± 0,11) | schw |
| 4,92 | (± 0,11) | schw |
| 4,30 | (± 0,09) | m |
| 4,15 | (± 0,08) | st |
| 3,96 | (± 0,08) | st–sst |
| 3,78 | (± 0,08) | m–st |
| 3,63 | (± 0,07) | sst |
| 3,31 | (± 0,07) | schw |
| 3,12 | (± 0,06) | schw–m |
| 3,08 | (± 0,06) | schw–m |
| 3,06 | (± 0,06) | m–st |
| 2,97 | (± 0,06) | st–sst |
| 2,85 | (± 0,06) | schw |
| 2,70 | (± 0,05) | schw–m |
| 2,66 | (± 0,05) | m–st |
| 2,63 | (± 0,05) | schw |
| 2,59 | (± 0,06) | schw–m |
| 2,54 | (± 0,05) | schw–m |
| 2,43 | (± 0,05) | sst |

## Tabelle 4

### Na-SKS-11

| d ($10^{-8}$ cm) | | rel. Intensität |
|---|---|---|
| 6,08 | (± 0,12) | schw |
| 5,88 | (± 0,12) | schw–m |
| 4,22 | (± 0,08) | sst |
| 3,26 | (± 0,07) | schw–m |
| 3,03 | (± 0,06) | schw–m |
| 2,94 | (± 0,06) | m |
| 2,89 | (± 0,06) | schw |
| 2,64 | (± 0,05) | schw–m |
| 2,56 | (± 0,05) | schw–m |
| 2,49 | (± 0,05) | schw |
| 2,43 | (± 0,05) | schw |

## Tabelle 5

### Na-SKS-9

| d ($10^{-8}$ cm | | rel. Intensität |
|---|---|---|
| 7,79 | (± 0,16) | m–sst |
| 4,68 | (± 0,09) | m–sst |
| 4,06 | (± 0,08) | schw–m |
| 3,94 | (± 0,08) | schw–m |
| 3,86 | (± 0,08) | schw–m |
| 3,62 | (± 0,07) | sst |
| 3,55 | (± 0,07) | st–sst |
| 3,53 | (± 0,07) | st–sst |
| 3,26 | (± 0,07) | schw–m |
| 3,18 | (± 0,06) | schw–m |
| 2,72 | (± 0,05) | schw–m |
| 2,46 | (± 0,05) | schw–m |

## Tabelle 6

### Na-SKS-10

| d ($10^{-8}$ cm) | | rel. Intensität |
|---|---|---|
| 10,3 | (± 0,21) | m–sst |
| 5,17 | (± 0,10) | schw–m |
| 4,02 | (± 0,08) | sst |
| 3,65 | (± 0,07) | m–st |
| 3,45 | (± 0,07) | m–sst |
| 3,17 | (± 0,06) | m–sst |
| 3,11 | (± 0,06) | schw–st |
| 2,48 | (± 0,05) | m–sst |
| 2,33 | (± 0,05) | schw–m |
| 2,01 | (± 0,04) | schw–m |

## Tabelle 7

### Na-SKS-13

| d ($10^{-8}$ cm) | | rel. Intensität |
|---|---|---|
| 6,37 | (± 0,13) | m–st |
| 4,04 | (± 0,08) | m–st |
| 3,87 | (± 0,08) | sst |
| 3,58 | (± 0,07) | m–st |
| 3,20 | (± 0,06) | schw–m |
| 3,04 | (± 0,06) | schw–m |
| 2,67 | (± 0,05) | schw–m |
| 2,45 | (± 0,05) | schw–m |
| 2,31 | (± 0,05) | schw–m |

## Claims

1. The use of a sodium silicate for softening water containing calcium and/or magnesium, wherein the silicate is a lamellar crystalline sodium silicate having the composition $NaMSi_xO_{2x+1} \cdot y\ H_2O$, in which M denotes sodium or hydrogen, x is a number from 1.9 to 4 and y is a number from 0 to 20.

2. The use as claimed in claim 1, wherein a lamellar crystalline sodium silicate is employed, the characteristic reflections of which in the X-ray diffraction diagram correspond to one of Tables 1 to 7:

## Table 1

### Na-SKS-5

| d ($10^{-8}$ cm) | | rel. intensity |
|---|---|---|
| 4.92 | (± 0.10 | m–st |
| 3.95 | (± 0.08) | w |
| 3.85 | (± 0.08) | m–st |
| 3.77 | (± 0.08) | st–vst |
| 3.29 | (± 0.07) | vst |
| 3.20 | (± 0.06) | w |
| 2.64 | (± 0.05) | w–m |
| 2.53 | (± 0.05) | w |
| 2.45 | (± 0.05) | m–st |
| 2.41 | (± 0.05) | w |
| 2.38 | (± 0.05) | w |

## Table 2

### Na-SKS-6

| d ($10^{-8}$ cm) | | rel. intensity |
|---|---|---|
| 4.92 | (± 0.10) | w |
| 3.97 | (± 0.08) | vst |
| 3.79 | (± 0.08) | m–st |
| 3.31 | (± 0.07) | w |
| 3.02 | (± 0.06) | w–m |
| 2.85 | (± 0.06) | w |
| 2.65 | (± 0.05) | w |
| 2.49 | (± 0.05) | w |
| 2.43 | (± 0.05) | m |

## Table 3

### Na-SKS-7

| d ($10^{-8}$ cm) | | rel. intensity |
|---|---|---|
| 7.96 | (± 0.16) | w |
| 6.00 | (± 0.12) | st–vst |
| 5.48 | (± 0.11) | w |
| 4.92 | (± 0.11) | w |
| 4.30 | (± 0.09) | m |
| 4.15 | (± 0.08) | st |
| 3.96 | (± 0.08) | st–vst |
| 3.78 | (± 0.08) | m–st |
| 3.63 | (± 0.07) | vst |
| 3.31 | (± 0.07) | w |
| 3.12 | (± 0.06) | w–m |
| 3.08 | (± 0.06) | w–m |
| 3.06 | (± 0.06) | m–st |
| 2.97 | (± 0.06) | st–vst |
| 2.85 | (± 0.06) | w |
| 2.70 | (± 0.05) | w–m |
| 2.66 | (± 0.05) | m–st |
| 2.63 | (± 0.05) | w |
| 2.59 | (± 0.06) | w–m |
| 2.54 | (± 0.05) | w–m |
| 2.43 | (± 0.05) | vst |

## Table 4

### Na-SKS-11

| d ($10^{-8}$ cm) | | rel. intensity |
|---|---|---|
| 6.08 | (± 0.12) | w |
| 5.88 | (± 0.12) | w–m |
| 4.22 | (± 0.08) | vst |
| 3.26 | (± 0.07) | w–m |
| 3.03 | (± 0.06) | w–m |
| 2.94 | (± 0.06) | m |
| 2.89 | (± 0.06) | w |
| 2.64 | (± 0.05) | w–m |
| 2.56 | (± 0.05) | w–m |
| 2.49 | (± 0.05) | w |
| 2.43 | (± 0.05) | w |

## Table 5

### Na-SKS-9

| d ($10^{-8}$ cm) | | rel. intensity |
|---|---|---|
| 7.79 | (± 0.16) | m–vst |
| 4.68 | (± 0.09) | m–vst |
| 4.06 | (± 0.08) | w–m |
| 3.94 | (± 0.08) | w–m |
| 3.86 | (± 0.08) | w–m |
| 3.62 | (± 0.07) | vst |
| 3.55 | (± 0.07) | st–vst |
| 3.53 | (± 0.07) | st–vst |
| 3.26 | (± 0.07) | w–m |
| 3.18 | (± 0.06) | w–m |
| 2.72 | (± 0.05) | w–m |
| 2.46 | (± 0.05) | w–m |

## Table 6

### Na-SKS-10

| d ($10^{-8}$ cm) | | rel. intensity |
|---|---|---|
| 10.3 | (± 0.21) | m–vst |
| 5.17 | (± 0.10) | w–m |
| 4.02 | (± 0.08) | vst |
| 3.65 | (± 0.07) | m–st |
| 3.45 | (± 0.07) | m–vst |
| 3.17 | (± 0.06) | m–vst |
| 3.11 | (± 0.06) | w–st |
| 2.48 | (± 0.05) | m–vst |
| 2.33 | (± 0.05) | w–m |
| 2.01 | (± 0.04) | w–m |

## Table 7

### Na-SKS-13

| d ($10^{-8}$ cm) | | rel. intensity |
|---|---|---|
| 6.37 | (± 0.13) | m–st |
| 4.04 | (± 0.08) | m–st |
| 3.87 | (± 0.08) | vst |
| 3.58 | (± 0.07) | m–st |

Table 7 (cont.)

Na-SKS-13

| d (10⁻⁸ cm) | | rel. intensity |
|---|---|---|
| 3.20 | (± 0.06) | w–m |
| 3.04 | (± 0.06) | w–m |
| 2.67 | (± 0.05) | w–m |
| 2.45 | (± 0.05) | w–m |
| 2.31 | (± 0.05) | w–m |

3. The use as claimed in claim 1, wherein a lamellar crystalline sodium silicate having the composition $NaMSi_2O_5 \cdot y\,H_2O$ is employed.

4. The use as claimed in claim 1, wherein the lamellar crystalline sodium silicate has an ion exchange capacity of 400 to 1,200 mmol of $Na^+$/100 g of product (calculated as anhydrous substance and determined by potentiometric titration with mineral acid).

5. The use as claimed in claim 1, wherein the water to be softened already contains sodium ions and has a pH of 8 to 12.

6. A process for softening water containing calcium and/or magnesium ions and sodium ions and with a pH of about 8 to 12 by addition of a sodium silicate, wherein the silicate is a lamellar crystalline sodium silicate having the composition $NaMSi_xO_{2x+1} \cdot y\,H_2O$, in which M denotes sodium or hydrogen, x is a number from 1.9 to 4 and y is a number from 0 to 20.

7. The process as claimed in claim 7, wherein the water to be softened contains not more than 500 mg of CaO/l and not more than 200 mg of MgO/l.

8. The process as claimed in claim 7, wherein the lamellar sodium silicate is employed in combination with other water softeners.

9. A washing and cleaning agent containing surfactants and builders, which contains a lamellar crystalline sodium silicate having the composition $NaMSi_xO_{2x+1} \cdot y\,H_2O$, in which M denotes sodium or hydrogen, x is a number from 1.9 to 4 and y is a number from 0 to 20, as a builder.

10. An agent as claimed in claim 9, which also contains at least one water-softening agent of the group comprising pentasodium triphosphate, trisodium nitrilotrisulfonate, zeolite A, phosphonates, polycarboxylates, amorphous silicates and other crystalline silicates.

11. An agent as claimed in claim 9, characterized in that the lamellar crystalline sodium silicate has an X-ray diffraction diagram cataloged by the Joint Committee on Powder Diffraction Standards under the numbers 18-1241, 22-1397, 22-1397A, 19-1233, 19-1234, 19-1237, 23-529, 24-1123, 24-1123A, 29-1261, 18-1242, 22-1395, 19-1235, 22-1396, 19-1236, 18-1240, 19-1232, 18-1239, 12-102, 23-703, 25-1309, 27-708 and 27-709.

12. An agent as claimed in claim 9, wherein a lamellar crystalline sodium silicate is employed, the characteristic reflections of which correspond to any one of Tables 1 to 7:

Table 1

Na-SKS-5

| d (10⁻⁸ cm) | | rel. intensity |
|---|---|---|
| 4.92 | (± 0.10 | m–st |
| 3.95 | (± 0.08) | w |
| 3.85 | (± 0.08) | m–st |
| 3.77 | (± 0.08) | st–vst |
| 3.29 | (± 0.07) | vst |
| 3.20 | (± 0.06) | w |
| 2.64 | (± 0.05) | w–m |
| 2.53 | (± 0.05) | w |
| 2.45 | (± 0.05) | m–st |
| 2.41 | (± 0.05) | w |
| 2.38 | (± 0.05) | w |

Table 2

Na-SKS-6

| d (10⁻⁸ cm) | | rel. intensity |
|---|---|---|
| 4.92 | (± 0.10) | w |
| 3.97 | (± 0.08) | vst |
| 3.79 | (± 0.08) | m–st |
| 3.31 | (± 0.07) | w |
| 3.02 | (± 0.06) | w–m |
| 2.85 | (± 0.06) | w |
| 2.65 | (± 0.05) | w |
| 2.49 | (± 0.05) | w |
| 2.43 | (± 0.05) | m |

Table 3

Na-SKS-7

| d (10⁻⁸ cm) | | rel. intensity |
|---|---|---|
| 7.96 | (± 0.16) | w |
| 6.00 | (± 0.12) | st–vst |
| 5.48 | (± 0.11) | w |
| 4.92 | (± 0.11) | w |
| 4.30 | (± 0.09) | m |
| 4.15 | (± 0.08) | st |
| 3.96 | (± 0.08) | st–vst |
| 3.78 | (± 0.08) | m–st |
| 3.63 | (± 0.07) | vst |
| 3.31 | (± 0.07) | w |
| 3.12 | (± 0.06) | w–m |
| 3.08 | (± 0.06) | w–m |
| 3.06 | (± 0.06) | m–st |
| 2.97 | (± 0.06) | st–vst |
| 2.85 | (± 0.06) | w |
| 2.70 | (± 0.05) | w–m |
| 2.66 | (± 0.05) | m–st |
| 2.63 | (± 0.05) | w |
| 2.59 | (± 0.06) | w–m |
| 2.54 | (± 0.05) | w–m |
| 2.43 | (± 0.05) | vst |

### Table 4

#### Na-SKS-11

| d ($10^{-8}$ cm) | | rel. intensity |
|---|---|---|
| 6.08 | (± 0.12) | w |
| 5.88 | (± 0.12) | w–m |
| 4.22 | (± 0.08) | vst |
| 3.26 | (± 0.07) | w–m |
| 3.03 | (± 0.06) | w–m |
| 2.94 | (± 0.06) | m |
| 2.89 | (± 0.06) | w |
| 2.64 | (± 0.05) | w–m |
| 2.56 | (± 0.05) | w–m |
| 2.49 | (± 0.05) | w |
| 2.43 | (± 0.05) | w |

### Table 5

#### Na-SKS-9

| d ($10^{-8}$ cm) | | rel. intensity |
|---|---|---|
| 7.79 | (± 0.16) | m–vst |
| 4.68 | (± 0.09) | m–vst |
| 4.06 | (± 0.08) | w–m |
| 3.94 | (± 0.08) | w–m |
| 3.86 | (± 0.08) | w–m |
| 3.62 | (± 0.07) | vst |
| 3.55 | (± 0.07) | st–vst |
| 3.53 | (± 0.07) | st–vst |
| 3.26 | (± 0.07) | w–m |
| 3.18 | (± 0.06) | w–m |
| 2.72 | (± 0.05) | w–m |
| 2.46 | (± 0.05) | w–m |

### Table 6

#### Na-SKS-10

| d ($10^{-8}$ cm) | | rel. intensity |
|---|---|---|
| 10.3 | (± 0.21) | m–vst |
| 5.17 | (± 0.10) | w–m |
| 4.02 | (± 0.08) | vst |
| 3.65 | (± 0.07) | m–st |
| 3.45 | (± 0.07) | m–vst |
| 3.17 | (± 0.06) | m–vst |
| 3.11 | (± 0.06) | w–st |
| 2.48 | (± 0.05) | m–vst |
| 2.33 | (± 0.05) | w–m |
| 2.01 | (± 0.04) | w–m |

### Table 7

#### Na-SKS-13

| d ($10^{-8}$ cm) | | rel. intensity |
|---|---|---|
| 6.37 | (± 0.13) | m–st |
| 4.04 | (± 0.08) | m–st |
| 3.87 | (± 0.08) | vst |
| 3.58 | (± 0.07) | m–st |

### Table 7 (cont.)

#### Na-SKS-13

| d ($10^{-8}$ cm) | | rel. intensity |
|---|---|---|
| 3.20 | (± 0.06) | w–m |
| 3.04 | (± 0.06) | w–m |
| 2.67 | (± 0.05) | w–m |
| 2.45 | (± 0.05) | w–m |
| 2.31 | (± 0.05) | w–m |

## Revendications

1. Utilisation de silicates de sodium pour adoucir une eau contenant du calcium et/ou du magnésium, caractérisée en ce que les silicates sont des phyllosilicates de sodium cristallins ayant la composition $NaMSi_xO_{2x-1} \cdot y\,H_2O$, où M est le sodium ou l'hydrogène, et x est un nombre de 1,9 à 4, et y est un nombre de 0 à 20.

2. Utilisation selon la revendication 1, caractérisée en ce qu'on utilise un phyllosilicate de sodium cristallin dont les réflexions caractéristiques, sur le diagramme de diffraction des rayons X, correspond à l'un des Tableaux 1 à 7.

### Tableau 1

#### Na-SKS-5

| d ($10^{-8}$ cm) | | Intensité rel. |
|---|---|---|
| 4,92 | (± 0,10 | m–f |
| 3,95 | (± 0,08) | fai |
| 3,85 | (± 0,08) | m–f |
| 3,77 | (± 0,08) | f–tf |
| 3,29 | (± 0,07) | tf |
| 3,20 | (± 0,06) | fai |
| 2,64 | (± 0,05) | fai–m |
| 2,53 | (± 0,05) | fai |
| 2,45 | (± 0,05) | m–f |
| 2,41 | (± 0,05) | fai |
| 2,38 | (± 0,05) | fai |

### Tableau 2

#### Na-SKS-6

| d ($10^{-8}$ cm) | | Intensité rel. |
|---|---|---|
| 4,92 | (± 0,10) | fai |
| 3,97 | (± 0,08) | tf |
| 3,79 | (± 0,08) | m–f |
| 3,31 | (± 0,07) | fai |
| 3,02 | (± 0,06) | fai–m |
| 2,85 | (± 0,06) | fai |
| 2,65 | (± 0,05) | fai |
| 2,49 | (± 0,05) | fai |
| 2,43 | (± 0,05) | m |

Tableau 3

Na-SKS-7

| d ($10^{-8}$ cm) | | Intensité rel. |
|---|---|---|
| 7,96 | ($\pm$ 0,16) | fai |
| 6,00 | ($\pm$ 0,12) | f-tf |
| 5,48 | ($\pm$ 0,11) | fai |
| 4,92 | ($\pm$ 0,11) | fai |
| 4,30 | ($\pm$ 0,09) | m |
| 4,15 | ($\pm$ 0,08) | f |
| 3,96 | ($\pm$ 0,08) | f-tf |
| 3,78 | ($\pm$ 0,08) | m-f |
| 3,63 | ($\pm$ 0,07) | fai |
| 3,31 | ($\pm$ 0,07) | fai |
| 3,12 | ($\pm$ 0,06) | fai-m |
| 3,08 | ($\pm$ 0,06) | fai-m |
| 3,06 | ($\pm$ 0,06) | m-f |
| 2,97 | ($\pm$ 0,06) | f-tf |
| 2,85 | ($\pm$ 0,06) | fai |
| 2,70 | ($\pm$ 0,05) | fai-m |
| 2,66 | ($\pm$ 0,05) | m-f |
| 2,63 | ($\pm$ 0,05) | fai |
| 2,59 | ($\pm$ 0,06) | fai-m |
| 2,54 | ($\pm$ 0,05) | fai-m |
| 2,43 | ($\pm$ 0,05) | tf |

Tableau 4

Na-SKS-11

| d ($10^{-8}$ cm) | | Intensité rel. |
|---|---|---|
| 6,08 | ($\pm$ 0,12) | fai |
| 5,88 | ($\pm$ 0,12) | fai-m |
| 4,22 | ($\pm$ 0,08) | tf |
| 3,26 | ($\pm$ 0,07) | fai-m |
| 3,03 | ($\pm$ 0,06) | fai-m |
| 2,94 | ($\pm$ 0,06) | m |
| 2,89 | ($\pm$ 0,06) | fai |
| 2,64 | ($\pm$ 0,05) | fai-m |
| 2,56 | ($\pm$ 0,05) | fai-m |
| 2,49 | ($\pm$ 0,05) | fai |
| 2,43 | ($\pm$ 0,05) | fai |

Tableau 5

Na-SKS-9

| d ($10^{-8}$ cm) | | Intensité rel. |
|---|---|---|
| 7,79 | ($\pm$ 0,16) | m-tf |
| 4,68 | ($\pm$ 0,09) | m-tf |
| 4,06 | ($\pm$ 0,08) | fai-m |
| 3,94 | ($\pm$ 0,08) | fai-m |
| 3,86 | ($\pm$ 0,08) | fai-m |
| 3,62 | ($\pm$ 0,07) | tf |
| 3,55 | ($\pm$ 0,07) | f-tf |
| 3,53 | ($\pm$ 0,07) | f-tf |
| 3,26 | ($\pm$ 0,07) | fai-m |
| 3,18 | ($\pm$ 0,06) | fai-m |
| 2,72 | ($\pm$ 0,05) | fai-m |
| 2,46 | ($\pm$ 0,05) | fai-m |

Tableau 6

Na-SKS-10

| d ($10^{-8}$ cm) | | Intensité rel. |
|---|---|---|
| 10,3 | ($\pm$ 0,21) | m-tf |
| 5,17 | ($\pm$ 0,10) | fai-m |
| 4,02 | ($\pm$ 0,08) | tf |
| 3,65 | ($\pm$ 0,07) | m-f |
| 3,45 | ($\pm$ 0,07) | m-tf |
| 3,17 | ($\pm$ 0,06) | m-tf |
| 3,11 | ($\pm$ 0,06) | fai-f |
| 2,48 | ($\pm$ 0,05) | m-tf |
| 2,33 | ($\pm$ 0,05) | fai-m |
| 2,01 | ($\pm$ 0,04) | fai-m |

Tableau 7

Na-SKS-13

| d ($10^{-8}$ cm) | | Intensité rel. |
|---|---|---|
| 6,37 | ($\pm$ 0,13) | m-f |
| 4,04 | ($\pm$ 0,08) | m-f |
| 3,87 | ($\pm$ 0,08) | tf |
| 3,58 | ($\pm$ 0,07) | m-f |
| 3,20 | ($\pm$ 0,06) | fai-m |
| 3,04 | ($\pm$ 0,06) | fai-m |
| 2,67 | ($\pm$ 0,05) | fai-m |
| 2,45 | ($\pm$ 0,05) | fai-m |
| 2,31 | ($\pm$ 0,05) | fai-m |

3. Utilisation selon la revendication 1, caractérisée en ce qu'on utilise un phyllosilicate de sodium cristallin ayant la composition $NaMSi_2O_5 \cdot y\, H_2O$.

4. Utilisation selon la revendication 1, caractérisée en ce que le phyllosilicate de sodium cristallin présente une capacité d'échange d'ions de 400 à 1200 mmol Na$^-$/100 g de produit (calculée sur la substance anhydre et déterminée par titrage potentiométrique à l'aide d'un acide minéral).

5. Utilisation selon la revendication 1, caractérisée en ce que l'eau à adoucir contient déjà des ions sodium et a un pH de 8 à 12.

6. Procédé d'adoucissement d'une eau contenant des ions calcium et/ou magnésium, ainsi que des ions sodium, et ayant un pH d'environ 8 à 12, par addition d'un silicate de sodium, caractérisé en ce que le silicate est un phyllosilicate de sodium cristallin ayant la composition $NaMSi_xO_{2x+1} \cdot y\, H_2O$, où M est le sodium ou l'hydrogène, et x est un nombre de 1,9 à 4, et y est un nombre de 0 à 20.

7. Procédé selon la revendication 7, caractérisé en ce que l'eau à adoucir contient au maximum 500 mg CaO/l et au maximum 200 mg MgO/l.

8. Procédé selon la revendication 7, caractérisé en ce que le phyllosilicate de sodium est utilisé en combinaison avec d'autres agents d'adoucissement de l'eau.

9. Produits détergents, contenant des surfactifs et des adjuvants, caractérisés en ce qu'ils contiennent en tant qu'adjuvants un phyllosilicate de sodium cristallin ayant la composition $NaMSi_xO_{2x+1} \cdot y H_2O$, où M est le sodium ou l'hydrogène, x est un nombre de 1,9 à 4, et y est un nombre de 0 à 20.

10. Détergents selon la revendication 9, caractérisés en ce qu'il contient encore au moins un agent d'adoucissement de l'eau appartenant au groupe comprenant le triphosphate pentasodique, le nitrilotrisulfonate trisodique, la zéolite A, des phosphonates, des polycarboxylates, des silicates amorphes et d'autres silicates cristallins.

11. Détergent selon la revendication 9, caractérisé en ce que le phyllosilicate de sodium crisallin présente un diagramme de diffraction des rayons X catalogué sous les numéros suivants par le Joint Committee on Powder Diffraction Standards: 18–1241, 22–1397, 22–1397 A, 19–1233, 19–1234, 19–1237, 23–529, 24–1123, 24–1123 A, 29–1261, 18–1242, 22–1395, 19–1235, 22–1396, 19–1236, 18–1240, 19–1232, 18–1239, 12–102, 23–703, 25–1309, 27–708 et 27–709.

12. Détergent selon la revendication 10, caractérisé en ce qu'on utilise un phyllosilicate de sodium cristallin dont les réflexions caractéristiques correspondent à l'un des Tableaux 1 à 7.

Tableau 1

Na-SKS-5

| d ($10^{-8}$ cm) | | Intensité rel. |
|---|---|---|
| 4,92 | (± 0,10 | m–f |
| 3,95 | (± 0,08) | fai |
| 3,85 | (± 0,08) | m–f |
| 3,77 | (± 0,08) | f–tf |
| 3,29 | (± 0,07) | tf |
| 3,20 | (± 0,06) | fai |
| 2,64 | (± 0,05) | fai–m |
| 2,53 | (± 0,05) | fai |
| 2,45 | (± 0,05) | m–f |
| 2,41 | (± 0,05) | fai |
| 2,38 | (± 0,05) | fai |

Tableau 2

Na-SKS-6

| d ($10^{-8}$ cm) | | Intensité rel. |
|---|---|---|
| 4,92 | (± 0,10) | fai |
| 3,97 | (± 0,08) | tf |
| 3,79 | (± 0,08) | m–f |
| 3,31 | (± 0,07) | fai |
| 3,02 | (± 0,06) | fai–m |
| 2,85 | (± 0,06) | fai |
| 2,65 | (± 0,05) | fai |
| 2,49 | (± 0,05) | fai |
| 2,43 | (± 0,05) | m |

Tableau 3

Na-SKS-7

| d ($10^{-8}$ cm) | | Intensité rel. |
|---|---|---|
| 7,96 | (± 0,16) | fai |
| 6,00 | (± 0,12) | f–tf |
| 5,48 | (± 0,11) | fai |
| 4,92 | (± 0,11) | fai |
| 4,30 | (± 0,09) | m |
| 4,15 | (± 0,08) | f |
| 3,96 | (± 0,08) | f–tf |
| 3,78 | (± 0,08) | m–f |
| 3,63 | (± 0,07) | fai |
| 3,31 | (± 0,07) | fai |
| 3,12 | (± 0,06) | fai–m |
| 3,08 | (± 0,06) | fai–m |
| 3,06 | (± 0,06) | m–f |
| 2,97 | (± 0,06) | f–tf |
| 2,85 | (± 0,06) | fai |
| 2,70 | (± 0,05) | fai–m |
| 2,66 | (± 0,05) | m–f |
| 2,63 | (± 0,05) | fai |
| 2,59 | (± 0,06) | fai–m |
| 2,54 | (± 0,05) | fai–m |
| 2,43 | (± 0,05) | tf |

Tableau 4

Na-SKS-11

| d ($10^{-8}$ cm) | | Intensité rel. |
|---|---|---|
| 6,08 | (± 0,12) | fai |
| 5,88 | (± 0,12) | fai–m |
| 4,22 | (± 0,08) | tf |
| 3,26 | (± 0,07) | fai–m |
| 3,03 | (± 0,06) | fai–m |
| 2,94 | (± 0,06) | m |
| 2,89 | (± 0,06) | fai |
| 2,64 | (± 0,05) | fai–m |
| 2,56 | (± 0,05) | fai–m |
| 2,49 | (± 0,05) | fai |
| 2,43 | (± 0,05) | fai |

Tableau 5

Na-SKS-9

| d ($10^{-8}$ cm) | | Intensité rel. |
|---|---|---|
| 7,79 | (± 0,16) | m–tf |
| 4,68 | (± 0,09) | m–tf |
| 4,06 | (± 0,08) | fai–m |
| 3,94 | (± 0,08) | fai–m |
| 3,86 | (± 0,08) | fai–m |
| 3,62 | (± 0,07) | tf |
| 3,55 | (± 0,07) | f–tf |
| 3,53 | (± 0,07) | f–tf |
| 3,26 | (± 0,07) | fai–m |
| 3,18 | (± 0,06) | fai–m |
| 2,72 | (± 0,05) | fai–m |
| 2,46 | (± 0,05) | fai–m |

Tableau 6

Na-SKS-10

| d (10⁻⁸ cm) | | Intensité rel. |
|---|---|---|
| 10,3 | (± 0,21) | m–tf |
| 5,17 | (± 0,10) | fai–m |
| 4,02 | (± 0,08) | tf |
| 3,65 | (± 0,07) | m–f |
| 3,45 | (± 0,07) | m–tf |
| 3,17 | (± 0,06) | m–tf |
| 3,11 | (± 0,06) | fai–f |
| 2,48 | (± 0,05) | m–tf |
| 2,33 | (± 0,05) | fai–m |
| 2,01 | (± 0,04) | fai–m |

Tableau 7

Na-SKS-13

| d (10⁻⁸ cm) | | Intensité rel. |
|---|---|---|
| 6,37 | (± 0,13) | m–f |
| 4,04 | (± 0,08) | m–f |
| 3,87 | (± 0,08) | tf |
| 3,58 | (± 0,07) | m–f |
| 3,20 | (± 0,06) | fai–m |
| 3,04 | (± 0,06) | fai–m |
| 2,67 | (± 0,05) | fai–m |
| 2,45 | (± 0,05) | fai–m |
| 2,31 | (± 0,05) | fai–m |